# EUROPEAN PATENT APPLICATION

(11) **EP 3 403 696 A1**
(43) Date of publication of application: **21.11.2018**
(21) Application number: 18172899.9
(22) Date of filing: 17.05.2018
(51) Int. Cl.: A62B 1/06, F16G 11/04, B63B 21/04, F16G 11/14

(54) **A COUPLING DEVICE**

(30) Priority: 17.05.2017 GB 201707943
(71) Applicant: Carne, Benjamin Toby, Falmouth, Cornwall TR11 3EP (GB); Neal, Steven Edward, Falmouth, Cornwall TR11 5GH (GB)
(72) Inventor: Carne, Benjamin Toby, Falmouth, Cornwall TR11 3EP (GB); Neal, Steven Edward, Falmouth, Cornwall TR11 5GH (GB)
(74) Representative: McCallum, Graeme David

(57) **Abstract**

A coupling device (1) is described for coupling a rope (12) to a support. The device (1) comprises a shaft (2) comprising a member (5) defining an aperture (14) at one end (6) and a fixing formation (3) at the other end (4). A stop member (7) is adjacent to the aperture (14). The stop member (7) extends out from the shaft (2) in a direction transverse to a plane defined by the aperture defining member (5). In use, a rope (12) having a loop (13) formed therein can be inserted through the aperture (14). The end (4) of the shaft (2) opposite the aperture (14) is inserted through the loop (13) in the rope (12) so that a part of the loop (13) butts against the stop member (7) with the rope extending through the aperture (14).

## Description

The invention relates to a coupling device, and in particular, a coupling device for coupling a flexible member, such as a rope, to a fixture or fitting, such as an anchor point or support member.

Conventionally, wire ropes or cables have been used as rigging on sailing boats, such as sailing yachts. In order to fix the rigging to the mast or the deck of the boat, metal terminators are typically swaged onto the end of the wire rope and the terminators used to attach the wire to the anchor point.

However, in recent years high performance fibre ropes have been adopted as a replacement for wire ropes for rigging. High performance fibre ropes are synthetic fibre ropes manufactured from synthetic polymers which include a high modulus synthetic fibre, such as a high modulus polyethylene (HMPE), sometimes known as ultra-high molecular weight polyethylene (UHMWPE). Dyneema® rope from Royal DSM NV is an example of a rope manufactured using such HMPE fibres and Spectra® fibre from Honeywell is an example of an HMPE fibre that can be used in the manufacture of such ropes.

An advantage of high performance fibre ropes for rigging on sailing boats is that the typical weight of a fibre rope for a given strength is less than that of a wire rope.

However, one of the disadvantages of synthetic fibre ropes is that a fitting cannot be swaged onto the end of the rope. Hence, other ways of attaching the ropes to anchor points must be used.

Currently, fibre ropes are generally spliced onto a metal eye. However, this has a disadvantage that the metal eye cannot then be removed from the rope without cutting the rope.

Other ways of attaching the rope to a fitting to be anchored to a boat include the device proposed in European Patent Application No. 3112722. This device has a socket into which a spliced eye of the rope is inserted through a hole. A plug is inserted into the spliced eye and the plug retains the rope within the socket by preventing it being pulled out of the hole. The socket is then screwed to a fitting which can be anchored to an anchor point. A disadvantage of this system is that it comprises a number of different components. It is therefore prone to one of the components being lost or misplaced. In addition, the costs associated with fabricating the multiple components that make up the device make it relatively expensive to manufacture.

In accordance with an aspect of the present invention, there is provided a coupling device for coupling a rope to a support, the device comprising a shaft comprising a member defining an aperture at one end and a fixing formation at the other end; and a stop member adjacent to the aperture, the stop member extending out from the shaft in a direction transverse to a plane defined by the aperture defining member.

In accordance with another aspect of the present invention, there is provided a method of coupling a rope to an attachment member, the method comprising providing a coupling device according to the first aspect; forming a loop in the rope; inserting the loop through the aperture; and inserting the end of the shaft opposite the aperture through the loop so that a part of the loop butts against the stop member with the rope extending through the aperture.

The term "rope" as used herein means any rope or cable however formed, whether by being wound, woven or plaited, or formed by an extrusion, pultrusion or winding process. It also includes ropes or cables formed from fibres or rods, whether the fibres are parallel to the longitudinal axis of the rope or wound around the longitudinal axis of the rope. The term "rope" includes flexible ropes and rigid ropes. It includes, but is not limited to, synthetic fibre ropes, composite fibre ropes, natural fibre ropes, cables formed from pultruded rods, such as pultruded carbon rods, cables formed from continuously wound fibres encased in covers or encapsulated in resin.

An advantage of the invention is that it provides a coupling device which does not have multiple components and which also enables a rope to be removed from the coupling device without requiring the rope to be cut.

Typically, in use, a rope having a loop formed therein can be inserted through the aperture, and the end of the shaft opposite the aperture inserted through the loop in the rope so that a part of the loop butts against the stop member with the rope extending through the aperture.

The loop is typically a fixed loop in the rope, so that the size of the loop is fixed.

Typically the rope butts against the stop member on the opposite side of the stop member from the aperture.

Preferably, the stop member includes a portion spaced from the shaft that extends in a direction away from the aperture, and such that the rope may locate between the shaft and the portion, in use.

Preferably, the stop member may be in the form of a collar that extends from one side of the shaft to the other side of the shaft and more preferably extends from adjacent a portion of the aperture defining member on one side of the shaft to adjacent of another portion of the aperture defining member on the opposite side of the shaft.

The fixing formation at the opposite end of the shaft from the aperture may be any suitable type of fixing formation. For example, the fixing formation may comprise at least one of: a through aperture, a stem ball fitting, a threaded fitting, a T fitting, a hook fitting and a fork fitting. The fork fitting may have a removable pin. Alternatively, the fixing formation may comprise another member defining another aperture. This would be useful where the coupling device is used to couple one rope to another rope.

Preferably, the coupling device is manufactured from a metal material, which may be an inert material, such as stainless steel. However, it is possible that any suitable metal could be used dependent on the application. Alternatively, the coupling device could be formed from another material, such as plastic.

Typically, the coupling device is formed in one piece by any suitable manufacturing process, for example, by a molding, forging, 3D printing or casting process. Alternatively, the coupling device could be formed from a single piece of material, such as by milling or another machining process, such as by using a CNC machine.

Typically, the coupling device may further comprise a retaining member extending outwardly from the shaft and spaced from the stop member and on the opposite side of the stop member from the aperture. Preferably, the retaining member extends in a direction transverse to a plane defined by the aperture. Typically, the retaining member is spaced from the stop member by a distance greater than or equal to a diameter of a rope that the coupling device is adapted to receive, in use.

Preferably, in use, the stop member defines a gap between the stop member and the shaft which is adapted to receive the rope fitted to the coupling device, in use. Preferably, a portion of the stop member is at an oblique angle to the longitudinal axis of the shaft such that, in use, a portion of the loop of the rope is adapted to locate between the stop member and the shaft. Most preferably, the shaft and stop member together define a recess in which the portion of the loop is located. The recess may be approximately V-shaped. Typically, the recess is between the sections of the shaft where the aperture defining member joins the shaft.

Typically, the coupling device is adapted to be used with a fibre rope. The fibre rope may be a synthetic rope and may include HMPE fibres. Alternatively, the coupling device may be adapted to be used with any other type of rope.

Although the coupling device may be used to couple a rope to a fixing or securing point on boats, such as for rigging on sailing boats, it can also be used in any other application where it is desired to connect a rope to any type of fixing or securing point, or even to another rope.

An example of a coupling device in accordance with the invention will now be described with reference to the accompanying drawings, in which:
Fig. 1 is a perspective view of a first example of a coupling device;
Fig. 2 is a side view of the coupling device of Fig. 1;
Fig. 3 is a plan view of the coupling device of Fig. 1;
Fig. 4 is a plan view of the coupling device of Figs. 1 to 3 with a rope fitted to the coupling device in use;
Fig. 5 is a side view of the coupling device and rope of Fig. 4;
Figs. 6A and 6B are a side view and a plan view respectively of a second example of a coupling device;
Figs. 7A and 7B are a side view and a plan view respectively of a third example of a coupling device;
Figs. 8A and 8B are a side view and a plan view respectively of a fourth example of a coupling device;
Figs. 9A and 9B are a side view and a plan view respectively of a fifth example of a coupling device; and
Figs. 10A and 10B are a side view and a plan view respectively of a sixth example of a coupling device.

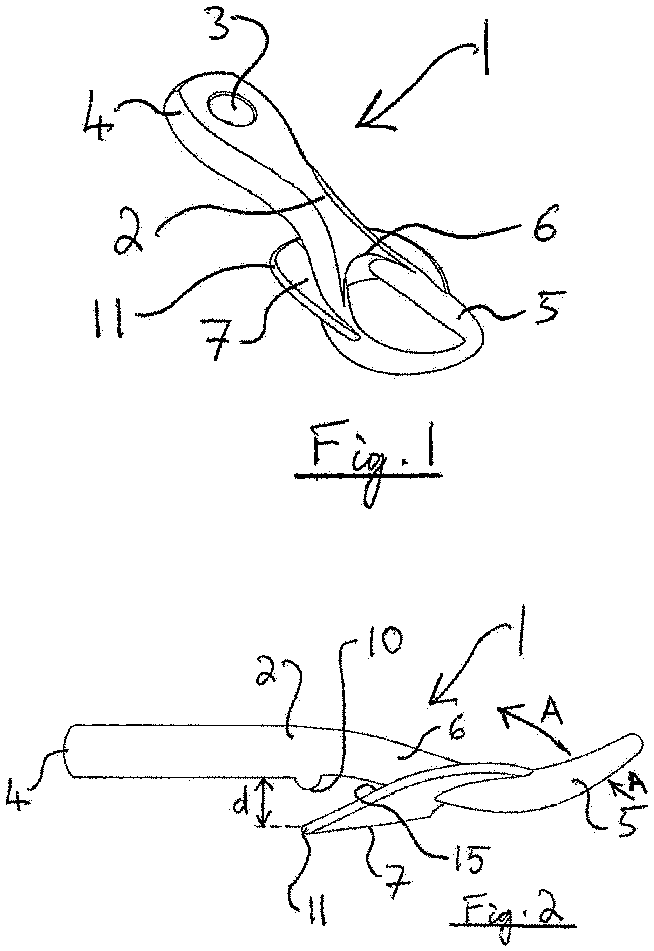

Figs. 1 to 3 show a coupling device 1 which comprises a shaft 2 having an anchor hole 3 at one end 4 and a loop member 5 at the opposite end 6 of the shaft 2. The loop member 5 defines an eye or aperture 14. A stop member 7 is also provided at or adjacent to the end 6 and extends from a side 8 to the member 5 around the end 6 to an opposite side 9 of the loop member 5. As shown in Figs. 1 to 3, the stop member 7 is in the form of a collar that extends from the loop member 5 over a part of the shaft 2 and is spaced from a surface of the shaft 2 by a distance d. The stop member 7 and the shaft 2 define an approximately V-shaped recess 15.

A retaining member 10 in the form of a protrusion or nipple is also provided on the shaft 2. The retaining member 10 is spaced from where the stop member 7 is attached to the end 6 of the shaft 2 and is also spaced from lip 11 of the stop member 7.

The anchor hole 3 forms a fixing formation and is used to attach the coupling device 1 to an anchor point, such as a fixture for rigging on a boat. This may be, for example, on a deck or gunwale of a yacht or dingy or could be on a mast or other spar of a yacht or dinghy.
In use, the coupling device 1 is used to couple a rope 12 to a support member (not shown), such as a deck of a boat, gunwale, mast or other spar using the anchor hole 3. The coupling device can also be used to couple a rope to any type of support member or fixing point whether at sea or on land. Examples of possible other support members that the coupling device could be used to couple a rope to include another type of watercraft, a marine structure or on land, such as a mast, aerial, building or vehicle.

The rope 12 to be connected using the coupling device has a loop 13 formed in it for example, by splicing. If the rope is not suitable to be spliced, the loop 13 may be preformed in the rope at the time of manufacture. The loop 13 may be flexible or could be substantially inflexible but formed to fit onto the coupling device 1.

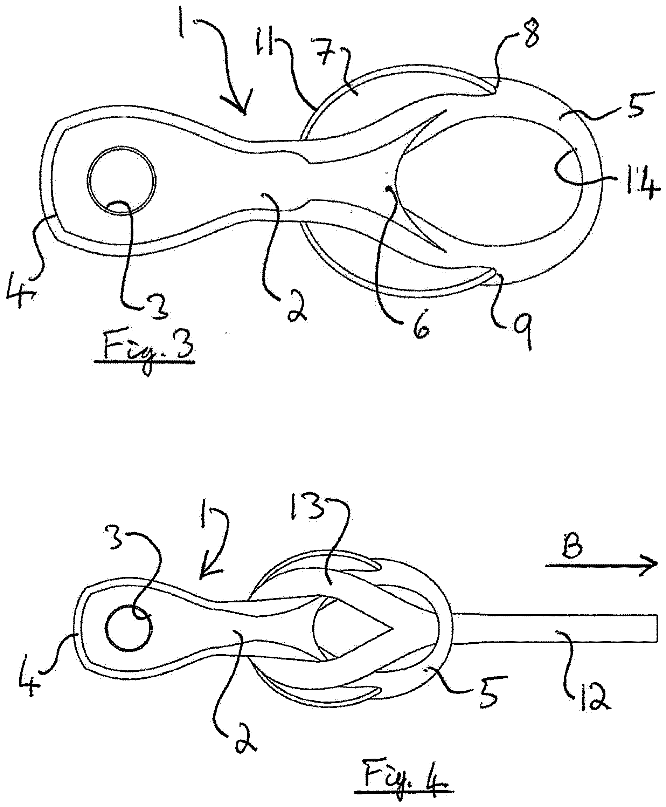

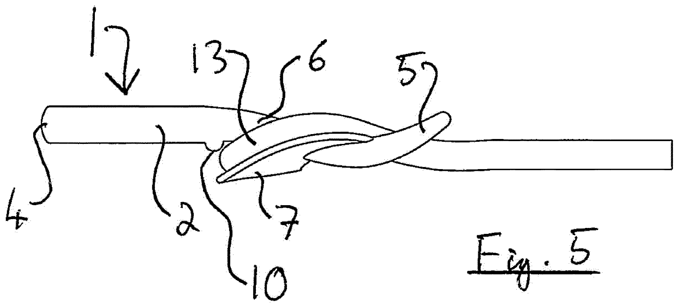

The loop 13 is inserted through the eye 14 formed by the loop member 5 in the direction of the arrows A, such that the loop 13 in the rope 12 is on the opposite side of the shaft 2 to the stop member 7 and retaining member 10. The loop 13 is then passed over the end 4, so that the shaft 2 extends through the loop 13 and the rope 12 pulled back through the eye 14 in the direction of the arrow B so that the loop 13 slides down the shaft towards the stop member 7 and is pulled over the retaining member 10 and located between stop member 7 and the end 6 of the shaft 2, as shown in Figs. 4 and 5. In this position, the loop 13 is pulled against the stop member 7 so that it is trapped between the stop member 7 and the shaft 2 in the V-shaped recess 15. This holds the rope 12 in position on the coupling device 1 and the retaining member 10 helps to prevent the loop 13 disengaging from the stop member 7 if tension in the rope 12 in the direction of arrow B is removed and the rope 12 goes slack.

After the rope 12 has been fitted to the coupling device 1, as explained above, the coupling device can attached to a support member or fixing point using the anchor hole 3.

The rope 12 can be removed from the coupling device 1 by first detaching the device 1 from the support member or fixing point. The loop 13 can then disengaged from the recess 15, passed over the end 4 of the shaft 2 and then removed through the eye 14. This essentially reverses the procedure described above for fitting the rope 12 to the coupling device 1.

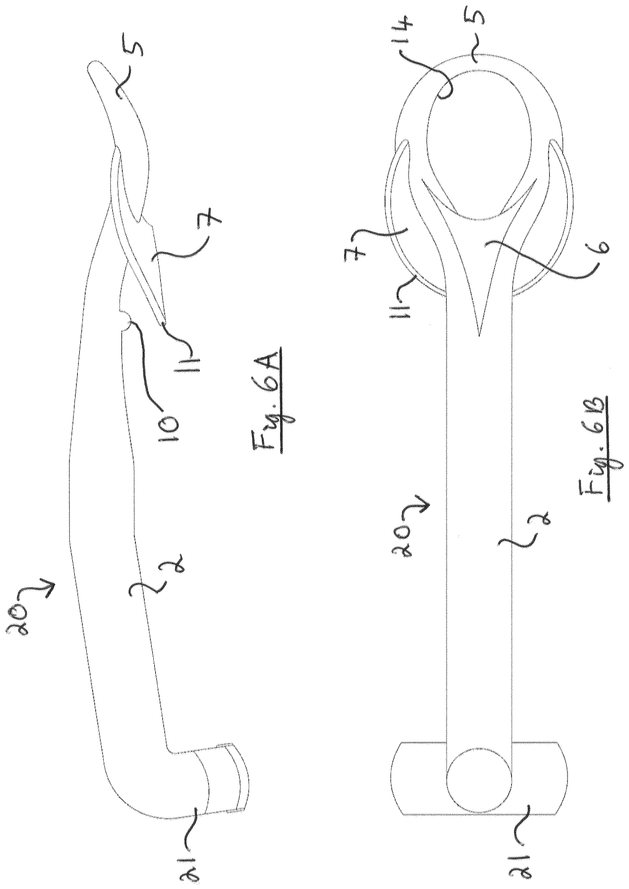

As an alternative to the anchor hole 3, the anchor hole 3 could be replaced by any other type of suitable fitting to enable the coupling device 1 to be anchored to or fixed to a desired support member or fixing point. For example, possible alternative fittings that could be used in place of the anchor hole 3 are shown in Figs. 6 to 10, in which parts which are the same as parts of the first example of the coupling device 1 have the same reference numerals.

Figs 6A and 6B show a second coupling device 20 with a T-shaped fitting 21. The T-shaped fitting is adapted to fit in a complementary shaped slot (not shown) on a member to which the coupling device 20 is to be attached.

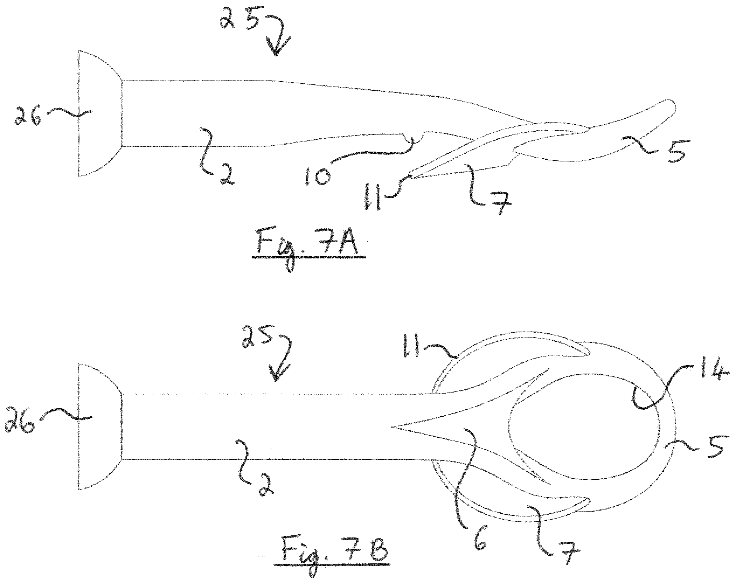

Figs 7A and 7B show a third example of a coupling device 25 with a stem ball (or ball) fitting 26. The stem ball 26 is adapted to fit in a complementary slot on a member to which the coupling device 25 is to be attached.

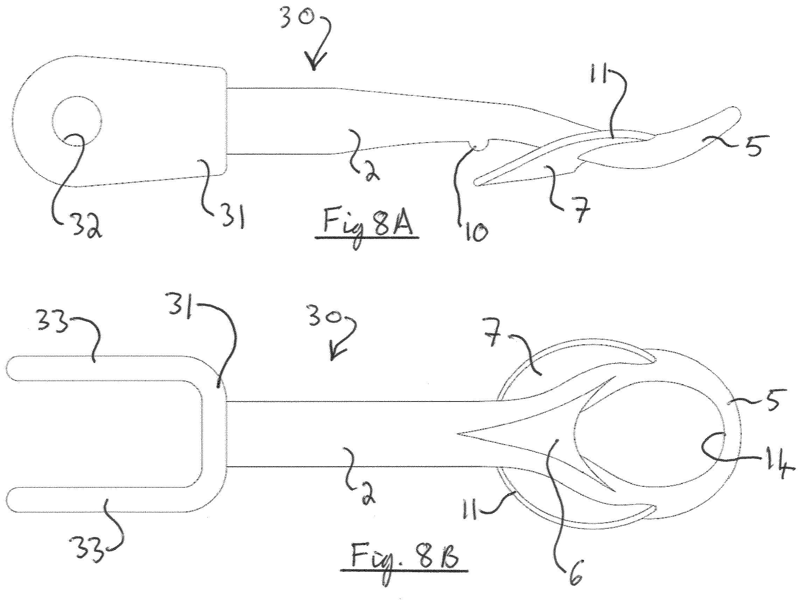

Figs 8A and 8B show a fourth example of a coupling device 30 with a fork fitting 31. The fork fitting 31 has two holes 32, one in each leg 33 of the fork fitting 31. The holes 32 are adapted to receive a removable pin (not shown) which can be used to secure or attach the fork fitting to, for example, a shackle or a member with a hole through which the removable pin is inserted.

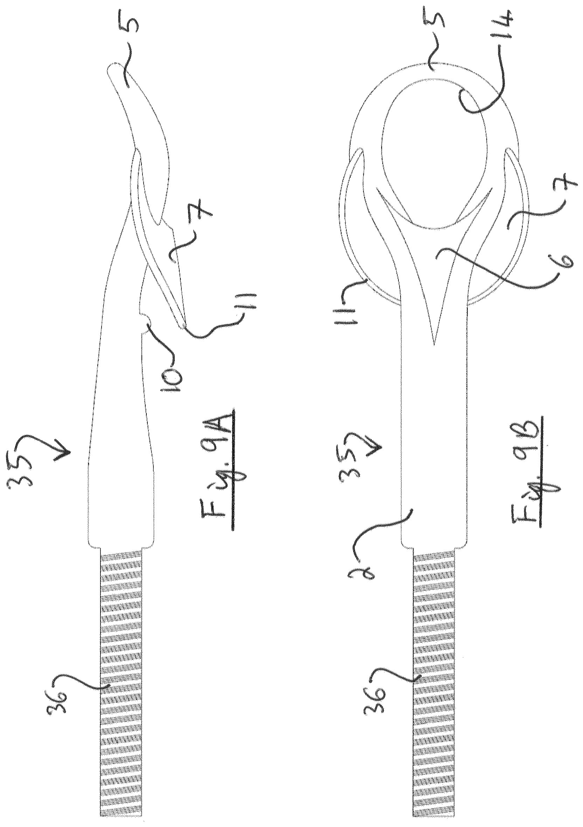

Figs 9A and 9B show a fifth example of a coupling device 35 with a threaded stud 36 as the fixing formation. The threaded stud 36 can be used to attach the coupling device 35 to a member by means of a complementary threaded female formation on a member to which the coupling device 35 is to be attached.

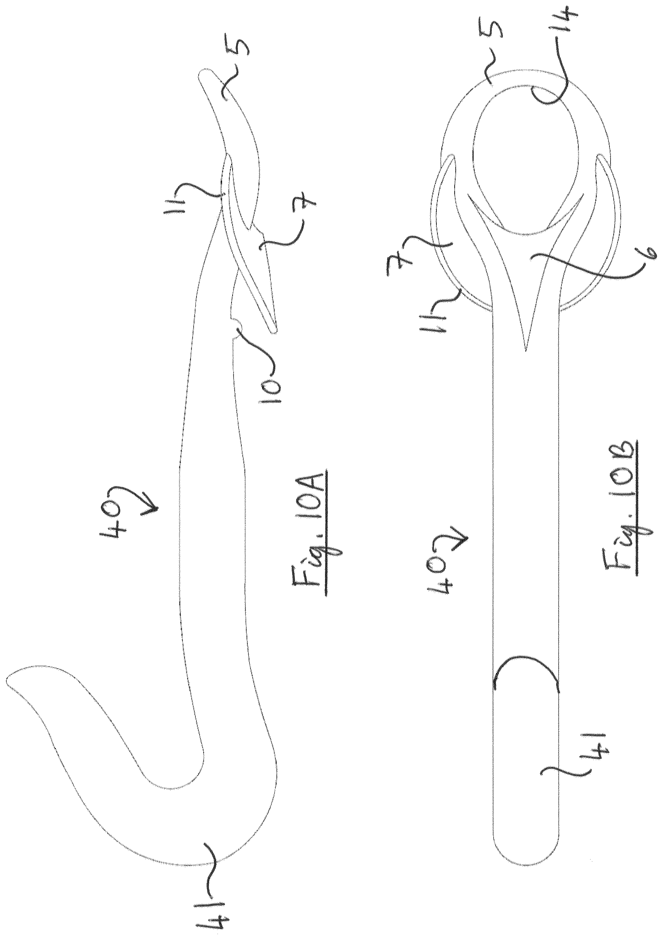

Figs 10A and 10B show a sixth example of a coupling device 40 with a hook 41. The hook 41 can be engaged with a complementary eye on a member to which the coupling device is to be attached.

As a further alternative, the anchor hole 3 could be replaced by another loop member 5 defining another aperture 14 where the coupling device is to couple one rope to another rope.

Although the coupling device 1 has been described above in relation to rigging for boats or yachts, the coupling device 1 can be used in any application on land or sea where it is necessary to couple a rope to a fastening point or securing point. The rope may be coupled at only one end or at both ends using two coupling devices 1, one at each end of the rope.

The coupling device 1 is particularly suitable for use with fibre ropes, such as synthetic fibre ropes and especially ropes incorporating HMPE fibres. However, it can also be used with any other suitable rope or cable, such as natural fibre ropes, wire ropes, cables formed from parallel fibres that are consolidated with a braided cover or resin and cables formed from pultruded rods, such as pultruded carbon rods.

The size of the coupling device 1 can varied to suit different rope diameters. For example for smaller diameter ropes, the aperture 14 and width of the shaft 2 can be smaller and for larger ropes the aperture 14 and the width of the shaft can be bigger. The coupling device 1 can be made in different sizes to suit different rope diameters. It is possible that one size of coupling device could be used for more than one rope diameter. For example, one size of coupling device could be used with two, three or even four different but similar rope diameters.

The invention has the advantage that it enables a rope, and in particular, fibre rope, for example rope including UHMWPE or HMPE to be attached to the coupling device 1 and the coupling device 1 to act as a terminator to enable the rope to be fixed and attached via the coupling device 1 to a support member or fixture. The invention also has the advantage that it is possible to remove the rope from the coupling device 1 without requiring the rope 12 to be cut after the device 1 is removed from the fixing point.

Furthermore, the stop member 7 helps to minimise the risk of the loop 13 sliding over loop member 5 in the coupling device 1. This could compromise the strength of the rope 12 due to the tight bends that would result in the loop 13 if it slides over the loop member 5 to form a hitch on the loop member 5.

In addition, the shape of the stop member 7 additionally, has the advantage of minimising the risk of accidental abrasion of the loop 13 by acting as a guard to a part of the surface of the loop 13 that is not in contact with shaft 2. In other words, the shape of the stop member 7 helps to shield and protect part of the surface of the rope 12 forming the loop 13.

## Claims

1. A coupling device for coupling a rope to a support, the device comprising a shaft comprising a member defining an aperture at one end; a fixing formation at the other end; and a stop member adjacent to the aperture, the stop member extending out from the shaft in a direction transverse to a plane defined by the aperture defining member.

2. A device according to any of the preceding claims, wherein the stop member includes a portion spaced from the shaft that extends in a direction away from the aperture.

3. A device according to claim 2, wherein the portion of the stop member is at an oblique angle to the longitudinal axis of the shaft.

4. A device according to any of the preceding claims, wherein the shaft and stop member together define a recess.

5. A device according to claim 4, wherein the recess is approximately V-shaped.

6. A device according to claim 4 or claim 5, wherein the recess is between the sections of the shaft where the aperture defining member joins the shaft.

7. A device according to any of the preceding claims, wherein the stop member is in the form of a collar that extends from one side of the shaft to the other side of the shaft.

8. A device according to claim 7, wherein the collar extends from adjacent a portion of the aperture defining member on one side of the shaft to adjacent another portion of the aperture defining member on the opposite side of the shaft.

9. A device according to any of the preceding claims, wherein a portion of a rope may locate between the shaft and the stop member, in use.

10. A coupling device according to any of the preceding claims, wherein the device is adapted to have a rope having a loop formed therein inserted through the aperture and the end of the shaft opposite the aperture inserted through the loop so that a part of the loop butts against the stop member with the rope extending through the aperture, in use.

11. A device according to claim 10, wherein the rope butts against the stop member on the opposite side of the stop member from the aperture, in use.

12. A device according to any of the preceding claims, further comprising a retaining member extending outwardly from the shaft and spaced from the stop member on the opposite side of the stop member from the aperture and preferably, the retaining member extends in a direction transverse to the plane defined by the aperture defining member.

13. A device according to claim 12, wherein the retaining member is spaced from the stop member by a distance greater than or equal to a diameter of a rope that the coupling device is adapted to receive, in use.

14. A device according to any of the preceding claims, wherein the fixing formation may comprise at least one of: a through aperture, a stem ball fitting, a threaded fitting, a T fitting, a hook fitting, a fork fitting and another member defining another aperture.

15. A device according to any of the preceding claims, wherein the coupling device is adapted to be used with a fibre rope, preferably a rope comprising HMPE fibres.
